# EUROPEAN PATENT SPECIFICATION

(11) **EP 3 491 933 B1**
(45) Date of publication and mention of the grant of the patent: **15.07.2020**
(21) Application number: 18209377.3
(22) Date of filing: 30.11.2018
(51) Int. Cl.: A23L 3/005, A23B 5/005, A23B 5/01, A23L 15/00

(54) **A METHOD OF MICROBIOLOGICAL SANITISATION OF THE SURFACE OF WHOLE EGGS IN SHELL**
VERFAHREN ZUR MIKROBIOLOGISCHEN DESINFEKTION DER OBERFLÄCHE GANZER EIER IN DER SCHALE
PROCÉDÉ DE DÉSINFECTION MICROBIOLOGIQUE DE LA SURFACE D'OEUFS ENTIERS EN COQUILLE

(30) Priority: 01.12.2017 IT 201700138714
(43) Date of publication of application: 05.06.2019
(73) Proprietor: Fontana, Mauro, 10147 Torino (IT); Bisotti, Stefano, 29121 Piacenza (IT); Branciaroli, Osvaldo, 10132 Torino (IT)
(72) Inventor: Fontana, Mauro, 10147 Torino (IT); Bisotti, Stefano, 29121 Piacenza (IT); Branciaroli, Osvaldo, 10132 Torino (IT)
(74) Representative: Comoglio, Elena

(56) References cited:
- EP-A2- 0 169 158
- EP-A2- 1 133 943
- US-A1- 2008 145 491
- DATABASE WPI Week 200424 Thomson Scientific, London, GB; AN 2004-252546 XP002781466, & JP 2004 081041 A (MAEKAWA SEISAKUSHO KK) 18 March 2004 (2004-03-18)
- DATABASE WPI Week 198418 Thomson Scientific, London, GB; AN 1984-111115 XP002781465, & JP S59 51735 A (MAEDA T) 26 March 1984 (1984-03-26)
- DATABASE WPI Week 200438 Thomson Scientific, London, GB; AN 2004-401289 XP002781467, & CN 1 481 695 A (SHENZHEN OCEAN POWER CORP) 17 March 2004 (2004-03-17)

## Description

The present invention relates to a method of microbiological sanitisation of the surface of whole eggs in shell.

More particularly, the present invention relates to a method of sanitising the surface of eggs from chicken or other avian species producing eggs suitable for human or animal food consumption, such as for example duck, goose, turkey, guinea fowl or quail eggs.

Since eggs are female germ cells designed to accommodate and nourish the embryo during development, they are foods with high nutritional value. In fact, they are a concentrated protein source and contain all nine amino acids classified as essential.

Eggs from avian species generally consist of the following main structures, from the outside towards the inside: shell, testaceous membrane, albumen and yolk.

Chicken eggshells have colours ranging from white to pink-brown. Generally, the shell consists of calcium carbonate (CaCO₃) and small amounts of magnesium carbonate (MgCO₃) and calcium phosphate (Ca₃(PO₄)₂).

The testaceous membrane is a double-layer membranous structure located beneath the shell, which has a protective function. The two layers of the testaceous membrane are tightly coupled to the shell along the entire inner surface thereof, except at the obtuse pole of the egg, at which they separate forming a space called "air chamber".

The albumen, also known as egg white, has the function of protecting the yolk by acting as a barrier against the penetration of microorganisms and therefore as a natural preservative. The albumen is made up of about 87-88% by weight of water, about 9-10% by weight of proteins (albumins, globulins, glycoproteins), the remaining being mineral salts (magnesium, sodium, potassium), vitamins of the B group and free glucose.

The yolk is the innermost part of the egg, which serves as nourishment for the developing embryo. Its chemical composition includes approximately 50% by weight of water, approximately 15-17% by weight of proteins and phosphoproteins, approximately 28-36% by weight of lipids (triglycerides, phospholipids, sterols, lecithin), approximately 0.1-0.3% by weight of glucides, and approximately 0.5-0.6% by weight of minerals.

Both in current use and according to the applicable legislation, the term "egg", when not accompanied by further specification, indicates a chicken egg; if it is an egg from another avian species, the name of the species to which it belongs must be indicated. However, within the scope of the present description, the term "egg" is used to indicate an egg from any avian species producing eggs suitable for human or animal food consumption, preferably one of the species listed above.

Chicken eggs, which represent the largest sector of the market, have an average weight of 60 grams and are a valuable food due to their high nutritional and caloric value, as they are characterised by a high content of phosphorus fats, vitamins, and lecithin.

From a commercial point of view, chicken eggs are divided into grade A and grade B eggs. Grade A eggs must not have undergone any preservation treatment and must not have been chilled at temperatures lower than 8°C, must be clean, intact and free from foreign flavours. The air chamber must be still and smaller than 6 millimetres. If the air chamber at the packaging time does not exceed 4 millimetres, grade A eggs may be defined as "extra"; this term must be deleted from the package after 7 days from the packaging date or after 9 days from the date of laying. On the other hand, grade B eggs are second-quality eggs, which do not meet the requirements for classification as grade A. They cannot be sold directly to the consumer but only to food industrial firms, which transform them into egg products, or to non-food industrial firms.

As is known, eggs are a substrate particularly suited to the development of several microorganisms, in particular including microorganisms coming from and living in the bowels, some of which are responsible in humans and other species for dangerous gastrointestinal syndromes, such as *Salmonella, E. coli, Klebsiella* and *Campylobacter.*

The *Salmonella* genus is characterised by Gram-negative, asporigenous and optional anaerobic bacilli, which ferment glucose thereby producing gas, degrade sulphur proteins thereby producing H₂S, reduce nitrates and do not produce cytochrome oxidase. Most of them are non-lactose fermenting bacilli. As they possess peritrichous flagella, they are all mobile, except for *S*. *Gallinarum-Pullorum.* Salmonella is the bacterial agent most commonly isolated in the event of sporadic and epidemic, foodborne infections. It has been reported for the first time in 1886, in a case of swine fever, by the American physician Daniel Elmer Salmon. Salmonella is naturally occurring, with more than 2000 variants (the so-called serotypes), but the most common strains in humans and animal species, in particular in those bred for the food chain, are *S*. *enteritidis* and *S*. *typhimurium.*

Infections caused by Salmonella are distinguished into typhoidal forms (*S. typhi* and *S*. *paratyphi,* responsible for typhoid fever and enteric fevers in general), in which humans are the only reservoir of the microorganism, and non-typhoidal forms, caused by the so-called minor Salmonella species (such as *S*. *typhimurium* and *S*. *enteritidis*), responsible for clinical forms with prevalent gastrointestinal manifestations. Non-typhoidal salmonellas, responsible for over 50% of total gastrointestinal infections, are one of the most frequent causes of food toxi-infections in the industrialised world. *Salmonella spp.* infections can occur in humans and in domestic and farm animals (chickens, pigs, cattle, rodents, dogs, cats, chicks) and wild animals, including domestic reptiles (iguanas and water turtles). The main reservoirs of infection are animals and their derivatives (such as raw or unpasteurized meat, eggs and milk), and the environment (non-drinking water) represents vehicles of infection.

The severity of salmonellosis symptoms ranges from simple disorders of the gastrointestinal tract (fever, abdominal pain, nausea, vomiting and diarrhea) to more severe clinical forms (bacteraemia or focal infections for example of bones and meninges), which mainly occur in fragile individuals (elderly people, children and individuals with immune system deficiencies). Symptoms of the disease may appear between 6 and 72 hours after ingestion of contaminated food (but most commonly occur after 12-36 hours) and last for 4-7 days. In most cases the disease has a benign course and does not require hospitalisation, but sometimes the infection can worsen to the point where hospitalisation is necessary.

Salmonella infections in humans can also cause an asymptomatic carrier status.

Infection is transmitted through the oral-fecal route, through ingestion of contaminated food or drinks or by contact, through handling of objects or small animals harbouring Salmonella. The main Salmonella transmission vehicles are food, contaminated water and small domestic animals.

Contaminated food is one of the most important vehicles that spread the infection in humans.

However, massive colonization of the pathogen in the food before ingestion is required to cause the disease. Usually, contaminated food does not appear to have alterations in the organoleptic characteristics (colour, smell, taste, texture). Food contamination can occur at the time of production, during preparation, or after cooking due to improper handling of the food. In particular, raw or undercooked eggs, egg-based derivatives, raw milk and raw milk derivatives (including powdered milk), meat and derivatives (especially if undercooked), sauces and salad dressings, mixes for cakes, creams, home-made and commercial ice cream, fruits and vegetables contaminated during cutting are to be considered as unsafe foods. Vehicles of infection are also surfaces and tools, and any food handled by infected people with poor personal hygiene.

Subjects suffering from achlorhydria (dysfunction of the digestive system consisting in the absence of hydrochloric acid in the gastric juice) and from neoplastic diseases, subjects treated with antacid drugs, under previous or concomitant broad-spectrum antibiotic therapy, and/or under immunosuppressive therapy, and subjects who have undergone surgery of the gastrointestinal tract are particularly susceptible to Salmonella infection. The severity of the disease correlates with the infecting serotype, the number of ingested microorganisms and the patient's resistance factors. In particular, reduced levels of gastric acidity correlate with a higher likelihood of manifesting diarrhea. In fact, the human intestine responds to germs that are not neutralised by acidic secretion of the stomach with an inflammatory reaction that causes the diarrhea event.

Subjects particularly at risk are elderly people, children, and pregnant women, but also individuals suffering from sickle cell anemia and HIV. In the latter, Salmonella infection also appears with recurrent episodes of non-typhoid septicemia.

In most cases, Salmonella infection occurs in a mild form and resolves within a few days. In these cases, the advice is not to counteract the diarrhea event, because it is the natural defence mechanism used by the body to expel germs. Normally, Salmonella treatment only requires a supportive therapy: administration of rehydrating oral solutions (which serve to compensate for water and salts lost through vomiting and diarrhea), lactic ferments and probiotics.

Although Salmonella is a bacterial infection, the use of antibiotics is not recommended, as it could lengthen the persistence of Salmonella in faeces or induce resistance. Hospitalization and use of antibiotics are only indicated in severe cases (with extraintestinal symptoms), in infants below 3 months of age and in subjects with chronic degenerative diseases.

Japanese patent JP 59014746 relates to a method comprising the washing of the shelled egg and radiation with infrared light having a wavelength of from 5 to 50 micrometres (microns) for about 2 minutes, so as to dry the washing water.

JP2004081041A discloses high temperature sterilization of egg in shell followed by cooling, wherein the heating is done by steam. In the context of a comparison, reference is made to heating by warm water or by far infrared ray.

There is the need to provide an egg sanitisation treatment, which allows all or most of the bacterial load occurring on the egg shell surface to be removed, so as to drastically reduce the risks of microbiological contamination, while not changing the organoleptic and rheological characteristics of the egg itself.

These and other needs are met by the method of microbiological sanitisation of the surface of whole eggs in shell, more particularly of eggs from chicken or other avian species which produce eggs suitable for human or animal food consumption, as defined in the characterising part of appended claim 1.

Further features of the method of the invention are defined in the dependent claims. All claims form an integral part of the specification.

The sanitisation method of the present invention is based on the application of predetermined, "high" and "raised" temperatures, and on the thermal excursion rate in successive times, for programmed intensities applied for a certain period of time, following the application and alternation of which, the *E.coli* and *Salmonella spp.* cells occurring on the egg shell in amounts sometimes higher than 1,000 cfu/cm² are inactivated.

The method essentially consists of three successive steps, respectively designated as pre-thermization step, high-temperature heating step and room temperature cooling step.

The correct application of the method allows preservation of the physical characteristics of the treated product, without causing major modifications or changes in the colour, composition and general appearance of the poultry product, in particular of the egg shell and the parts immediately below it.

The different temperatures on the surface of the treated product are conveniently reached in a period of time between fifteen and thirty seconds from the beginning of the treatment, in order to reduce the chances that the microorganisms that are present on the surface of the egg shell have the time to "adapt" to the high temperatures. The intensity of the surface treatment in terms of heat brought to the surface in relation to the time of application varies depending on the type, the animal species of origin and the size of the eggs subjected to the method of the invention.

The method of the present invention will now be described in greater detail, purely by way of illustration, and not by way of limitation.

The first step, designated as pre-thermization step, consists in thermally treating the whole eggs in shell at a temperature comprised between 70 and 82°C, for a period of time long enough to ensure that the surface of the egg shell reaches - without consequences on the structure of the shell and underlying membranes - the above-mentioned temperature values. This pre-thermization step is carried out inside a tunnel along which the eggs are carried, via any suitable type of conveyor, and rotated 360° about the major axis for a predetermined number of rotations. The aforesaid predetermined number of rotations is generally comprised between 1 and 6.

The aforesaid temperatures are preferably reached through the use of infrared (IR) heating lamps, which are designed to emit electromagnetic radiation at a wavelength in the mid-infrared region (5-30 micrometres (microns), which in this step is comprised between 5 and 18 micrometres (microns).

The angle of incidence of the IR rays is guaranteed by the particular placement of the IR sources in LED lamp strips.

The second step of the sanitisation method according to the present invention, designated as high-temperature heating step, consists in thermally treating the eggs at a temperature comprised between 85 and 105°C. This temperature refers to the temperature at the surface of the eggshell, which is reached by rapid heating of the eggs themselves and is maintained for a period of time generally comprised between 3 and 20 seconds. In this step too, the high temperature is reached through IR radiation in the mid-infrared region, preferably by means of infrared (IR) heating lamps, which are designed to emit electromagnetic radiation at a wavelength in the mid-infrared region (5-30 micrometres (microns), which in this step is comprised between 18 and 30 micrometres (microns). In this step too, the eggs are placed inside a tunnel where they are carried and rotated 360° about the major axis for a predetermined number of rotations. Said predetermined number of rotations is generally comprised between 1 and 3. The intensity of the surface treatment in terms of heat brought to the surface in relation to the time of application varies depending on the type and the species of origin of the eggs or other poultry product, the size, the thickness of the shell, the length of the major axis. The angle of incidence of the IR rays is guaranteed by the particular placement of the IR sources in LED lamp strips.

The third step of the sanitisation method according to the present invention, designated as cooling step, consists in cooling the eggs at room temperature, i.e. a temperature generally comprised between 15 and 25°C. Preferably, the cooling is carried out during the packaging step or shortly before it. The temperatures indicated above are preferably achieved by using a forced, more preferably filtered, cold air stream, for a period of time generally ranging from 5 to 55 seconds.

As indicated previously, the high-temperature pre-thermization and heating steps are implemented through the use of IR lamps. The IR lamps used can be of the tubular or the laminar type.

More in particular, the IR radiation sources used in the present invention consist in a series of LED type radiant elements capable of emitting radiation in the mid-IR region. The IR elements are preferably fixed to a steel surface with fixed or variable curvature, which guarantees the precision of the direction of the IR rays and their effective reaching of the surface to be treated with the greatest possible uniformity.

The preferred technical features are shown below:
Power: 1500 to 300 W
Power supply: 230 V
Positioning: horizontal or vertical, parallel or perpendicular depending on the surface of the product to be treated
Maximum treatment times per cm² of product surface: 3-125 seconds

The experimental tests were performed in collaboration with LAV srl laboratory, Strada Carignano 58/14, Moncalieri (TO).

The results obtained with regard to the sanitisation of the surface of the eggs and of the treated poultry products are shown in the table below. This table shows the reduction rate of various types of bacteria as a result of the sanitisation treatment of the present invention (expressed as the mean Log reduction of the surface load after treatment), as well as the measurement method used.

Lastly, it should be noted that this sanitisation treatment, when extended for a number of minutes preferably ranging from about 4 to 10, allows internal sanitisation of the product and its solidification for sale and/or use as a "hard-boiled egg in shell".

| **Microorganism** | **Mean Log** | **Method** |
|---|---|---|
| Enterobacteriaceae/g | 4 | AFNOR N° 3M 01/8-06-2001 |
| E. coli/g | 3 | AFNOR N° 3M 01/8-06-2001 |
| Campylobacter | 3 | UNI 10984-2 |
| Salmonella SPP | 3 | Tecra |

No significant differences were detected in the product before and after the treatment according to the invention, neither from the chemical-physical point of view, nor from the organoleptic point of view.

## Claims

1. A method of microbiological sanitisation of the surface of whole eggs in shell, **characterized in that** it comprises the following sequence of treatment steps:
- pre-thermization step, by heating the whole eggs in shell at a temperature comprised between 70 and 82°C for a period of time sufficient to allow the surface of the eggs to reach the above temperature, wherein said heating is carried out by IR radiation at a wavelength comprised between 5 and 18 micrometres (microns);
- high-temperature heating step, by heating the whole eggs in shell at a temperature comprised between 85 and 105°C, which is maintained for a period of time comprised between 3 and 20 seconds, wherein said heating is carried out by IR radiation at a wavelength comprised between 18 and 30 micrometres (microns); and
- cooling step, by cooling the whole eggs in shell to a temperature comprised between 15 and 25°C at the surface of the whole eggs in shell,
wherein the pre-thermization step and the high-temperature heating step are carried out by carrying the whole eggs in shell through a tunnel in which the eggs are rotated 360° about their major axis for a predetermined number of rotations.

2. The method according to claim 1, wherein the IR radiation in the pre-thermization and high-temperature heating steps is carried out by employing LED-type radiant elements.

3. The method according to claim 1 or 2, wherein said whole eggs in shell are from an avian species which produces eggs suitable for human or animal food consumption.

4. The method according to claim 3, wherein said whole eggs in shell are selected from chicken eggs, duck eggs, goose eggs, turkey eggs, guinea fowl eggs or quail eggs.

5. The method according to any of claims 1 to 4, wherein said predetermined number of rotations is comprised between 1 and 6 in the pre-thermization step and between 1 and 3 in the high-temperature heating step.

6. The method according to any of claims 1 to 5, wherein the cooling step is carried out by means of a forced cold air stream.

7. The method according to claim 6, wherein the cooling step by means of the forced cold air stream has a duration comprised between 5 and 55 seconds.

## Patentansprüche

1. Verfahren zur mikrobiologischen Desinfektion der Oberfläche ganzer Eier in der Schale, **dadurch gekennzeichnet, dass** es die nachstehende Abfolge von Behandlungsschritten umfasst:
- einen Vorthermisierungsschritt durch Erhitzen der ganzen Eier in der Schale auf eine Temperatur zwischen 70 und 82°C für eine Zeitspanne, die ausreichend dafür ist, dass die Oberfläche der Eier die obige Temperatur erreicht, wobei dieses Erhitzen mittels IR-Strahlung bei einer Wellenlänge zwischen 5 und 18 Mikrometern (Mikrons) durchgeführt wird;
- einen Hochtemperatur-Erhitzungsschritt durch Erhitzen der ganzen Eier in der Schale auf eine Temperatur zwischen 85 und 105°C für eine Ze itspanne zwischen 3 und 20 Sekunden, wobei das Erhitzen mittels IR-Strahlung bei einer Wellenlänge zwischen 18 und 30 Mikrometern (Mikrons) durchgeführt wird; und
- einen Abkühlungsschritt durch Abkühlen der ganzen Eier in der Schale auf eine Temperatur zwischen 15 und 25°C an der Oberfläche der ganze n Eier in der Schale,
wobei der Vorthermisierungsschritt und der Hochtemperatur-Erhitzungsschritt ausgeführt werden, indem die ganzen Eier in der Schale durch einen Tunnel befördert werden, in welchem die Eier für eine vorbestimmte Zahl von 360º Drehungen um ihre Hauptachse rotiert werden.

2. Verfahren nach Anspruch 1, wobei die IR-Strahlung in dem Vorthermisierungsschritt und dem Hochtemperatur-Erhitzungsschritt durch die Verwendung von Strahlungsheizkörpern vom LED-Typ erfolgt.

3. Verfahren nach Anspruch 1 oder 2, wobei die ganzen Eier in der Schale von einer Vogelart stammen, welche Eier erzeugt, die zur menschlichen oder tierischen Nahrungsaufnahme geeignet sind.

4. Verfahren nach Anspruch 3, wobei die ganzen Eier in der Schale aus Hühnereiern, Enteneiern, Gänseeiern, Truthahneiern, Perlhuhneiern oder Wachteleiern ausgewählt sind.

5. Verfahren nach einem der Ansprüche 1 bis 4, wobei die vorbestimmte Anzahl von Rotationen in dem Vorthermisierungsschritt zwischen 1 und 6 und in dem Hochtemperatur-Erhitzungsschritt zwischen 1 und 3 beträgt.

6. Verfahren nach einem der Ansprüche 1 bis 5, wobei der Abkühlungsschritt mittels Einwirkung eines erzwungenen Kaltluftstroms erfolgt.

7. Verfahren nach Anspruch 6, wobei der Abkühlungsschritt mittels der Einwirkung eines erzwungenen Kaltluftstroms eine Dauer von zwischen 5 und 55 Sekunden hat.

## Revendications

1. Procédé de désinfection microbiologique de la surface d'œufs entiers en coquille, **caractérisé en ce qu'**il comprend la séquence d'étapes de traitement suivante :
- une étape de pré-thermisation, en chauffant les œufs entiers en coquille à une température comprise entre 70 et 82°C pendant une période de temps suffisante pour permettre à la surface des œufs d'atteindre la température ci-dessus, dans laquelle ledit chauffage est effectué par irradiation IR à une longueur d'onde comprise entre 5 et 18 micromètres (microns) ;
- une étape de chauffage à haute température, en chauffant les œufs entiers en coquille à une température comprise entre 85 et 105°C, qui est maintenue pendant une période de temps comprise entre 3 et 20 secondes, dans laquelle ledit chauffage est effectué par irradiation IR à une longueur d'onde comprise entre 18 et 30 micromètres (microns) ; et
- une étape de refroidissement, en refroidissant les œufs entiers en coquille à une température comprise entre 15 et 25°C à la surface des œufs entiers en coquille,
dans lequel l'étape de pré-thermisation et l'étape de chauffage à haute température sont effectuées en transportant les œufs entiers en coquille à travers un tunnel dans lequel les œufs sont tournés sur 360° autour de leur axe principal pour un nombre de rotations prédéterminé.

2. Procédé selon la revendication 1, dans lequel l'irradiation IR dans les étapes de pré-thermisation et de chauffage à haute température est effectué en utilisant des éléments radiants de type DEL.

3. Procédé selon la revendication 1 ou 2, dans lequel lesdits œufs entiers en coquille proviennent d'une espèce aviaire qui produit des œufs convenant à la consommation alimentaire humaine ou animale.

4. Procédé selon la revendication 3, dans lequel lesdits œufs entiers en coquille sont sélectionnés parmi des œufs de poule, des œufs de canard, des œufs d'oie, des œufs de dinde, des œufs de pintade ou des œufs de caille.

5. Procédé selon l'une quelconque des revendications 1 à 4, dans lequel ledit nombre de rotations prédéterminé est compris entre 1 et 6 dans l'étape de pré-thermisation et entre 1 et 3 dans l'étape de chauffage à haute température.

6. Procédé selon l'une quelconque des revendications 1 à 5, dans lequel l'étape de refroidissement est effectuée au moyen d'un flux d'air froid forcé.

7. Procédé selon la revendication 6, dans lequel l'étape de refroidissement au moyen du flux d'air froid forcé a une durée comprise entre 5 et 55 secondes.
